# EUROPÄISCHE PATENTANMELDUNG

(11) **EP 0 539 816 A1**
(43) Veröffentlichungstag der Anmeldung: **05.05.1993**
(21) Anmeldenummer: 92117778.8
(22) Anmeldetag: 17.10.1992
(51) Int. Cl.: B01D 53/26

(54) **Vorrichtung zum Abtauen von Kälte-Trocknern unter 0 Grad Celcius**

(30) Priorität: 31.10.1991 DE 4135887
(71) Anmelder: Seiler, Wolfram, Dr., D-41466 Neuss (DE)
(72) Erfinder: Seiler, Wolfram, Dr., D-41466 Neuss (DE)
(74) Vertreter: Türk, Gille, Hrabal, Leifert

(57) **Zusammenfassung**

Bei einer Vorrichtung zum Kühltrocknen von Gasen, insbesondere von Druckluft, mit wenigstens einem Gasführungssystem, mit einer Kühleinrichtung, welche eine von einem Kälteträger durchströmte Wärmetauscheinrichtung, ein Kühlaggregat zum Herunterkühlen des Kältemittels auf eine solche Temperatur, daß sich die im Gas enthaltene Flüssigkeit oder der im Gas enthaltene Dampf in Eisform niederschlägt, und eine Enteisungseinrichtung aufweist, ist zusätzlich zu einem Haupt-Gasführungssystem ein weiteres Gasführungssystem vorgesehen, das die Enteisungseinrichtung umfaßt und dem warmes Kältemittel aus dem Haupt-Gasführungssystem zuleitbar ist, wobei für die Enteisungseinrichtung wenigstens zwei Auseiser vorgesehen sind, von denen wenigstens einer wahlweise regenerativ betreibbar ist, und daß stromabwärts der Auseiser in dem zweiten Gasführungssystem ein Sammelbehälter angeordnet ist, der mit jedem der Auseiser verbunden ist und von dem aus uneingeschränkt Kälteverbraucher gespeist werden.

## Beschreibung

Die Erfindung betrifft eine Vorrichtung zum Kühltrocknen von Gasen, insbesondere von Druckluft, mit wenigstens einem Gasführungssystem, mit einer Kühleinrichtung, welche eine von einem Kälteträger durchströmte Wärmetauscheinrichtung, ein Kühlaggregat zum Herunterkühlen des Kältemittels auf eine solche Temperatur, daß sich die im Gas enthaltene Flüssigkeit oder der im Gas enthaltene Dampf in Eisform niederschlägt, und eine Enteisungseinrichtung aufweist. Insbesondere betrifft die Erfindung eine Vorrichtung zum Abtauen von Kältetrocknern unter 0° Celsius.

Kältemaschinen erzeugen beim Komprimieren warmes gasförmiges Kältemittel, das allgemein als Heißgas-Kältemittel bezeichnet wird. Im nachgeschalteten Kondensator gibt dieses Kältemittel einen großen Teil seiner Wärme an die Umgebungsluft oder an Kühlwasser ab und wird dabei flüssig. In einem Verdampfer wird es durch Expansionsventile expandiert und nimmt dabei aus einem zu kühlenden Bereich Wärme auf, wobei es wieder gasförmig wird. Dieser Heiz- und Kühleffekt wird beispielsweise bei Klimaanlagen ausgenutzt, wobei Kondensator und Verdampfer in ihrer Funktion austauschbar sind und auf der gleichen Außenseite entweder heizen oder kühlen.

Im Verdampfer kann sich an den Rippen oder in den Leitungen Eis, das aus der Feuchtigkeit der Umgebungsluft stammt, absetzen. Um das Eis zu entfernen und die Komponenten wieder anzuwärmen, wird innerhalb des Kältekreises für eine bestimmte Zeit Heißgas-Kältemittel zu den vereisten Komponenten geleitet. Der normale Betriebsprozeß wird dabei unterbrochen. Das Kältemittel wird dann vom Kompressor angesaugt und steht erst danach für die weitere Kältenutzung wieder zur Verfügung. Das Heißgas-Kältemittel kann auch zum Regulieren des Druckes auf der Arbeitsseite der Anlage dienen, wobei ausgenutzt wird, daß bei Gasen eine Temperaturänderung immer auch mit einer entsprechenden Druckänderung verbunden ist.

Das Aufheizen bzw. das Beimischen wird ausschließlich innerhalb des Standardkreises durch Umschalten auf andere Komponenten oder durch Umleiten vorgenommen.

Die oben beschriebenen Probleme treten in verstärktem Maße bei Vorrichtungen zum Kühltrocknen von Gasen auf, mit denen gezielt Feuchtigkeit aus einem Umgebungsgas wie Druckluft abgezogen werden soll. Besondere Schwierigkeiten ergeben sich, wenn der Drucktaupunkt unter 0°C liegt, da dann in den für die Entfeuchtung vorgesehenen Komponenten ein Rauhreif- oder Eisansatz entsteht. Dieser bindet sich bei tiefen Temperaturen, die durch kalte Sole oder durch das Kältemittel eines Kühlaggregates erzeugt werden, an speziell dafür gestalteten Oberflächen. Nach einer mehr oder weniger langen Standzeit wird der Belag so stark, daß aus Gründen der Wirtschaftlichkeit bzw. zum Beibehalten eines guten Wirkungsgrades der Vorrichtung dieser Eisbelag entfernt werden muß.

Aus der DE-A 39 41 713 ist eine Vorrichtung zum Kühltrocknen von Gasen der eingangs genannten Gattung bekannt, für die vorgesehen ist, das Ablösen der Eiskristalle durch Wärmeschocks mit Hilfe von Elektroimpulsen, durch Druckstöße, beispielsweise mittels Ultraschall, oder durch Abtauvorgänge vorzunehmen. Es handelt sich dabei um relativ aufwendige Maßnahmen, wobei beim Abtauen zusätzlich noch die im Zusammenhang mit den Klimaanlagen beschriebenen Probleme entstehen.

Der Erfindung liegt die Aufgabe zugrunde, eine Vorrichtung zum Kühltrocknen von Gasen zu schaffen, bei der das Enteisen auf einfache Weise vorgenommen werden kann, ohne den Kälteerzeugungsbetrieb zu unterbrechen.

Diese Aufgabe wird von einer Vorrichtung der eingangs genannten Gattung mit den Merkmalen des kennzeichnenden Teiles von Patentanspruch 1 gelöst. Eine vorteilhafte Ausgestaltung ist im Unteranspruch angegeben.

Erfindungsgemäß ist zusätzlich zu einem Haupt-Gasführungssystem ein weiteres Gasführungssystem vorgesehen, das die Enteisungseinrichtung umfaßt und dem warmes Kältemittel aus dem Haupt-Gasführungssystem zuleitbar ist, wobei für die Enteisungseinrichtung wenigstens zwei Auseiser vorgesehen sind, von denen wenigstens einer wahlweise regenerativ betreibbar ist, weiterhin ist stromabwärts der Auseiser in dem zweiten Gasführungssystem ein Sammelbehälter angeordnet, von dem aus jeder Kälteverbraucher im System gespeist wird. Der Abtauvorgang erfolgt damit mit Hilfe des Heißgas-Kältemittels, ohne daß der Kälteerzeugungsbetrieb unterbrochen werden müßte. Aus dem Sammelbehälter steht das abgekühlte Kältemittel uneingeschränkt zur Verfügung. Das Zurückdrücken in den Sammelbehälter ist nur dann möglich, wenn der Druckabfall beim Kühlverflüssigen im Kondensator dem Druck im regenrativen Auseiser entspricht. Damit wird weniger Energie an die Umgebung abgegeben. Es sind mindestens zwei Auseiser erforderlich, damit der Betrieb der Vorrichtung während der Regeneration aufrechterhalten werden kann. Auch Anordnungen mit mehr als zwei Auseisern werden vorteilhaft eingesetzt; insbesondere, wenn sehr feuchte Medien getrocknet werden sollen, kann es beispielsweise erforderlich sein, ständig zwei oder mehr Auseiser für den Betrieb bereitzustellen, während ein oder zwei weitere der Auseiser regeneriert werden.

Vorteilhaft kann ein Luft-Sole-Wärmetauscher mit warmem Kältemittel aus dem Haupt-Gasführungssystem speisbar sein, wobei der Wärmetauscher ausgangsseitig mit dem Sammelbehälter verbunden ist. So werden Leistungseinbrüche vermieden.

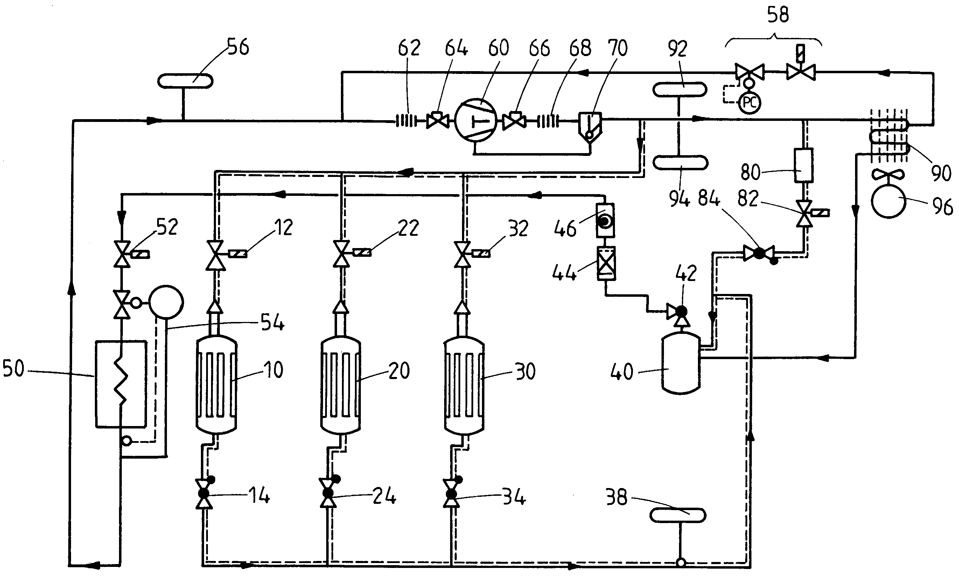

Im folgenden soll die Erfindung lediglich beispielhaft anhand der beigefügten Zeichnung näher erläutert werden. Dabei zeigt die einzige Figur in schematischer Darstellung den Kältekreislauf für eine Vorrichtung gemäß der vorliegenden Erfindung.

In einem Kältemittelkreislauf wird ein Kältemittel über ein elektromagnetisch betreibbares Ventil 52 und gesteuert über eine Regelstrecke 54 einem Wärmetauscher 50 zugeführt, in dem dem Sekundärmedium ein Teil seiner Wärmeenergie entzogen wird. Das aus dem Wärmetauscher 50 austretende abgearbeitete, entspannte und gasförmige Kältemittel gelangt dann über ein Verbindungselement 62 und ein Ventil 64 in einen Kompressor 60, in dem es auf einen vorbestimmten Druck verdichtet und über ein weiteres Ventil 64 und ein weiteres Verbindungselement 66 dem Kreis wieder vorgespannt zugeführt wird.

Bei normalem Betrieb der Vorrichtung wird das verdichtete und somit erhitzte Kältemittel einem der drei bei diesem Ausführungsbeispiel vorgesehenen Auseisern 10, 20, 30 zugeleitet. Jedem der Auseiser 10, 20, 30 ist ein elektromagnetisch betreibbares Ventil 12, 22, 32 vorgeschaltet, mittels dessen einer der Auseiser wahlweise für die Regeneration aktiviert werden kann, und es ist jeweils ein Rückschlagventil 14, 24, 34 nachgeschaltet, das das Rückströmen des aus dem jeweiligen Auseiser austretenden Kältemittels verhindert.

Zwei der Auseiser sind kälteaktiv und dienen dazu, in der Umgebungsluft befindliche Feuchtigkeit auszufällen, wobei sich auf dem Auseiser dann im Laufe der Zeit ein Rauhreifbelag niederschlägt. Der dritte Auseiser wird regenerativ betrieben, d. h. er wird während einer gewissen Zeitdauer auf eine im folgenden noch zu beschreibende Weise abgetaut. Während des Betriebes der Vorrichtung wechseln die Auseiser ihre Funktion, was entweder periodisch, gesteuert beispielsweise über eine Zeitschaltung, oder durch Überwachung einer charakteristischen Temperatur des Auseisers, wie seiner Oberflächentemperatur geschehen kann. Sobald ein kritischer Zeit- oder Temperaturwert erreicht wird, was bedeutet, daß der betroffene Auseiser seine Ausfällfunktion nicht mehr oder nur noch ungenügend erfüllen kann, wird er in den Regenerationsmodus übernommen, während der bis zu diesem Zeitpunkt regenerierte Auseiser wieder Trocknungsfunktionen ausführt.

Im dargestellten Ausführungsbeispiel sind die drei Auseiser 10, 20, 30 parallel geschaltet, sie weisen also eine gemeinsame Zuleitung und eine gemeinsame Ableitung auf.

Die elektromagnetisch betreibbaren Ventile 12, 22, 32 sind geschlossen, solange der jeweilige Auseiser 10, 20, 30 zum Trocknen eingesetzt wird. Wenn einer der Auseiser 10, 20, 30 nach einer bestimmten Betriebsdauer abgetaut werden soll, beispielsweise der Auseiser 10, wird das zugeordnete Ventil 12 geöffnet, so daß aus dem Kompressor 60 austretendes Heißgas-Kältemittel über die gemeinsame Zuleitung in den nunmehr regenerativ betriebenen Auseiser 10 eintreten kann. Durch das Abtauen des am Auseiser 10 ausgefällten Rauhreifes, wobei das Tauwasser über einen nicht dargestellten Abscheider abgeführt wird, kühlt sich das Heißgas-Kältemittel ab. Es wird über die gemeinsame Ableitung der Auseiser einem Sammelbehälter 40 zugeführt. Zweckmäßigerweise ist in der Ableitung eine Temperaturüberwachungsvorrichtung 38 angeordnet.

Das abgekühlte, verflüssigte Heißgas-Kältemittel kann vom Sammelbehälter 60 aus uneingeschränkt zur Kälteerzeugung genutzt werden. Dazu wird es über einen Filter 44 und eine Drossel 46 wieder dem Wärmetauscher 50 zugeleitet.

In der Leitung zwischen dem Wärmetauscher 50 und dem Kompressor 60 ist stromabwärts des Wärmetauschers 50 eine Drucküberwachungseinrichtung 56 vorgesehen, die den eingangsseitigen Saugdruck vor dem Kompressor 60 erfaßt und auswertet. Um gegebenenfalls den Saugdruck zu stabilisieren, mündet in den Leitungsabschnitt zwischen der Drucküberwachungseinrichtung 56 und dem Kompressor 60 eine Leitung, über die Heißgas-Kältemittel beigemischt werden kann, geregelt über eine Durchflußsteuereinheit 58 in dieser Leitung, wobei das Heißgas-Kältemittel ausgangsseitig von dem im Kompressor 60 verdichteten Kältemittel abgezweigt wird.

Verdichtetes Kältemittel aus dem Kompressor 60 kann weiterhin einem Luft-Sole-Wärmetauscher 80 zugeleitet werden. In dem Luft-Sole-Wärmetauscher 80 tauschen die von einem Druckluft-Kompressor her einströmende warme Luft mit der rückströmenden kalten Luft aus dem Auseiser, die eine Temperatur bis herab zu -30° C haben kann, über die Sole ihre Wärmepotentiale aus. Bei rückströmenden Gasen, die eine sehr tiefe Temperatur haben, kann dabei - je nach Auslegung der Vorrichtung - die Energiebilanz sogar negativ werden, was zur Folge hat, daß die Temperatur der Sole erheblich absinkt, so daß es unter Umständen auf der Primärseite zu einer Massivvereisung kommt. Da dies einen Funktionsausfall des Wärmetauschers bedeutet, wird zu Temperaturregelungszwecken über einen dafür vorgesehenen Wärmetauscher Heißgas-Kältemittel zugeführt, das nach Abkühlung über der Sole in dem Luft-Sole-Speicher 80 in den Sammelbehälter 40 gedrückt wird. Damit kann das Kältemittel weiter für die gewünschten Kühl-Funktionen eingesetzt werden.

Weitere Drucküberwachungsvorrichtungen 92, 94 sind ausgangsseitig des Kompressors 60 und stromabwärts der Zuleitung zu den Auseisern 10, 20, 30 vorgesehen, so daß die Betriebsbedingungen in der Leitung für die Heißgas-Kältemittelbeimischung für den Kompressor und in der Leitung zum Luft-Sole-Speicher 80 überwacht werden können. Nicht als Heißgas abgezweigtes Kältemittel gelangt in dem Hauptkreis in einen Verflüssiger 90 und, gekühlt durch Ventilator 96, von dem Verflüssiger 90 in den Sammelbehälter 40.

Mit der Vorrichtung gemäß der vorliegenden Erfindung steht ein unweltfreundliches System zur Verfügung, das seine Eigenenergie optimal nutzt und daher weniger Energie an die Umgebung abgibt als bisher bekannte Systeme.

## Patentansprüche

1. Vorrichtung zum Kühltrocknen von Gasen, insbesondere von Druckluft, mit wenigstens einen Gasführungssystem, mit einer Kühleinrichtung, welche eine von einem Kälteträger durchströmte Wärmetauscheinrichtung, ein Kühlaggregat zum Herunterkühlen des Kältemittels auf eine solche Temperatur, daß sich die im Gas enthaltene Flüssigkeit oder der im Gas enthaltene Dampf in Eisform niederschlägt, und eine Enteisungseinrichtung aufweist, **dadurch gekennzeichnet**, daß zusätzlich zu einem Haupt-Gasführungssystem ein weiteres Gasführungssystem vorgesehen ist, das die Enteisungseinrichtung umfaßt und dem warmes Kältemittel aus dem Haupt-Gasführungssystem zuleitbar ist, wobei von den drei Auseisern (10, 20, 30) wenigstens einer wahlweise regenerativ betrieben wird und daß stromabwärts dieser Auseiser mit heißem Kältemittel zum Abtauen durchströmt wird und das stromabwärts verflüssigt in einen Sammelbehälter(40) gedrückt wird, von wo aus es Kälteverbrauchern (50) uneingeschränkt und ohne Unterbrechung als flüssiges Kältemittel zugeführt wird.

2. Vorrichtung nach Anspruch 1, dadurch gekennzeichnet, daß ein Luft-Sole-Wärmetauscher (80) mit warmem Kältemittel aus dem Haupt-Gasführungssystem speisbar ist, wobei der Wärmetauscher (80) ausgangsseitig mit dem Sammelbehälter (40) verbunden ist.
